# EUROPÄISCHE PATENTSCHRIFT

(11) **EP 2 071 276 B1**
(45) Veröffentlichungstag und Bekanntmachung des Hinweises auf die Patenterteilung: **09.06.2010**
(21) Anmeldenummer: 08168875.6
(22) Anmeldetag: 12.11.2008
(51) Int. Cl.: G01B 7/00, G01D 5/14

(54) **Sensor**
Sensor
Capteur

(30) Priorität: 23.11.2007 DE 102007056768
(43) Veröffentlichungstag der Anmeldung: 17.06.2009
(73) Patentinhaber: Metallux AG, 71404 Korb (DE)
(72) Erfinder: Herlinger, Peter, 73733, Esslingen (DE)
(74) Vertreter: BRP Renaud & Partner

(56) Entgegenhaltungen:
- EP-A- 1 491 771
- EP-A- 1 731 916

## Beschreibung

Die vorliegende Erfindung betrifft einen Sensor, insbesondere einen Positionssensor, mit den Merkmalen des Oberbegriffs des Anspruchs 1.

Aus der EP 1 491 771 B1 ist ein Sensor bekannt, der zwei zueinander beabstandete Trägerfolien aufweist, die jeweils zumindest eine Elektrode besitzen. Ferner weist der Sensor ein weichmagnetisches Betätigungselement auf, das sich entlang einer der Trägerfolien erstreckt und an dieser befestigt ist. Der Sensor ist berührungslos mittels magnetischer Kräfte betätigbar, beispielsweise mit Hilfe eines Dauermagneten, der an einer vom Betätigungselement abgewandten Seite des Sensors entlang des Sensors positionierbar ist. An der jeweiligen Position des Dauermagneten wird das Betätigungselement angezogen, wodurch es die eine Trägerfolie, an der es befestigt ist, gegen die andere Trägerfolie andrückt, was zu einer Kontaktierung der Elektroden in einer der Magnetposition zugeordneten Relativlage führt.

Beim bekannten Sensor besteht das weichmagnetische Betätigungselement aus einer ferrohaltigen Kunststofffolie.

Ein weiterer Sensor, der mit einer weichmagnetischen Folie arbeitet, ist aus der DE 43 09 442 A1 bekannt.

Ferner ist aus der DE 43 35 004 A1 ein herkömmlicher Foliensensor bekannt, der kein weichmagnetisches Betätigungselement aufweist.

Die Verwendung einer ferrohaltigen Kunststofffolie als weichmagnetisches Betätigungselement kann nachteilig sein, da mit Hilfe einer ferrohaltigen Kunststofffolie nur vergleichsweise geringe Andrückkräfte realisierbar sind. Um größere Andrückkräfte zu ermöglichen, ist es grundsätzlich möglich, die zur Betätigung wirkenden magnetischen Anziehungskräfte entsprechend zu erhöhen und/oder die Dicke der ferrohaltigen Kunststofffolie zu erhöhen. Ebenso ist es grundsätzlich möglich, anstelle einer ferrohaltigen Kunststofffolie einen Blechstreifen zu verwenden. Ein derartiger Blechstreifen ist jedoch ebenso wie eine dicke Kunststofffolie vergleichsweise steif, so dass wieder erhöhte magnetische Anziehungskräfte erforderlich sind, um die gewünschte Betätigung des Sensors zu erreichen.

Die vorliegende Erfindung beschäftigt sich mit dem Problem, für einen Sensor der eingangs genannten Art eine verbesserte Ausführungsform anzugeben, die sich insbesondere dadurch auszeichnet, dass mit relativ kleinen magnetischen Anziehungskräften eine zuverlässige Kontaktierung bzw. Betätigung des Sensors erzielbar ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das weichmagnetische Betätigungselement durch einen Stapel weichmagnetischer Folienkörper zu bilden, wobei die einzelnen Folienkörper hinsichtlich Scherkräfte relativ zueinander beweglich sind. Durch den zumindest zwei Folienkörper umfassenden Stapel lassen sich auch bei kleinen magnetischen Anziehungskräften hinreichend große Anpresskräfte zur Betätigung des Sensors realisieren. Die einzelnen Folienkörper sind vergleichsweise dünn, z. B. besitzen sie eine Stärke von weniger als 0,1 mm. Hierdurch sind die Folienkörper vergleichsweise flexibel und lassen sich auch bei kleinen magnetischen Kräften präzise lokal elastisch durchbiegen. Da mehrere derartige Folienkörper aufeinander gestapelt sind, addieren sich die einzelnen Betätigungskräfte des jeweiligen Folienkörpers zu einer relativ großen Betätigungskraft des Stapels bzw. des Betätigungselements. Da die einzelnen Folienkörper jedoch relativ zueinander in der Scherrichtung elastisch bzw. beweglich aneinander angeordnet sind, ist der gesamte Stapel nach wie vor sehr biegeweich und dementsprechend auch bei geringen magnetischen Anziehungskräften lokal elastisch durchbiegbar. Mit anderen Worten, der Stapel einzelner Folienkörper kann annähernd die gleiche Betätigungskraft erzeugen wie ein einzelner Folienkörper mit der gleichen Gesamtdicke, die sich aus der Summe der Einzeldicken der einzelnen Folienkörper des Stapels ergibt. Gleichzeitig besitzt der Stapel durch die in Scherrichtung elastische bzw. bewegliche Anordnung der einzelnen Folienkörper eine deutlich kleinere Biegesteifigkeit als der genannte einzelne, dicke Folienkörper. Somit kann mit Hilfe des erfindungsgemäßen Sensors auch bei vergleichsweise kleinen magnetischen Anziehungskräften eine zuverlässige Betätigung des Sensors erreicht werden.

Gemäß einer vorteilhaften Ausführungsform kann zumindest einer der weichmagnetischen Folienkörper aus einem ferromagnetischen Material oder aus einem ferromagnetischen Metall oder aus Eisenblech bestehen. Besonders effektiv ist die Stapelbildung mit Metallfolien, da der Stapel hierdurch hohe Betätigungskräfte bei einer kleinen Dickenabmessung realisieren kann.

Die einzelnen Folienkörper können vorzugsweise über eine dauerelastische Klebverbindung aneinander befestigt sein. Beispielsweise kann hierzu ein beidseitig klebender Klebstreifen verwendet werden. Alternativ können die einzelnen Folienkörper auf lose aufeinanderliegen.

Innerhalb des Stapels können die einzelnen Folienkörper relativ zueinander beabstandet angeordnet sein, was die freie Beweglichkeit in der Scherrichtung der einzelnen Folienkörper relativ zueinander erleichtert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Querschnitt durch einen Sensor,
- Fig. 2: einen Querschnitt des Sensors wie in Fig. 1, jedoch während seiner Betätigung,
- Fig. 3: einen vereinfachten Längsschnitt des Sensors während seiner Betätigung.

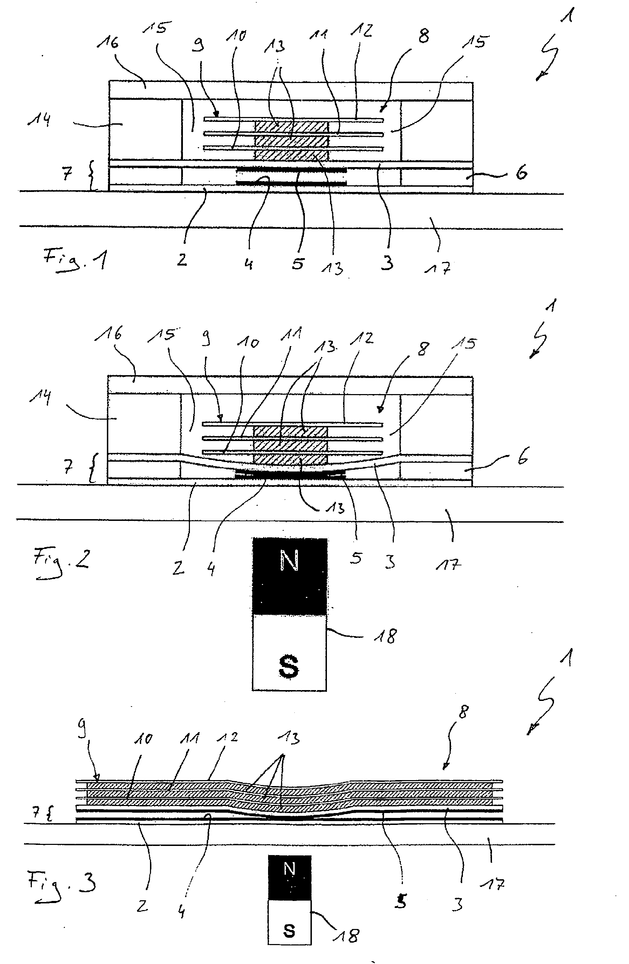

Entsprechend den Fig. 1 bis 3 umfasst ein Sensor 1 zwei zueinander beabstandete Trägerfolien 2, 3, die jeweils zumindest eine Elektrode 4, 5 aufweisen. Die beiden Trägerfolien 2, 3 werden im folgenden entsprechend den Darstellungen der Fig. 1 bis 3 auch als untere Trägerfolie 2 und obere Trägerfolie 3 bezeichnet. Zweckmäßig kann zur Distanzierung der beiden Trägerfolien 2, 3 eine rahmenförmige Distanzfolie 6 vorgesehen sein, die zwischen den beiden Trägerfolien 2, 3 angeordnet und mit diesen fest verbunden, insbesondere verklebt oder verschweißt, ist. Die beiden Trägerfolien 2, 3 bilden zusammen mit der Distanzfolie 6 einen Sensorabschnitt 7 des Sensors 1. Dieser Sensorabschnitt 7 kann durch einen herkömmlichen Foliensensor gebildet sein, der berührungslos oder durch Berührung betätigbar ist.

Der Sensor 1 weist ferner ein weichmagnetisches Betätigungselement 8 auf. Dieses ist an einer der Trägerfolien, hier an der oberen Trägerfolie 3 befestigt und erstreckt sich entlang dieser Trägerfolie 3. Zweckmäßig ist das Betätigungselement 8 an der jeweiligen Trägerfolie 3 bezüglich des Querschnitts der Fig. 1 und 2 mittig angeordnet.

Erfindungsgemäß besteht das Betätigungselement 8 aus einem Stapel 9, der seinerseits wenigstens zwei weichmagnetische Folienkörper 10, 11, 12 aufweist. Im gezeigten bevorzugten Beispiel sind drei derartige Folienkörper 10, 11, 12 vorgesehen. Die drei Folienkörper 10, 11, 12 werden im folgenden entsprechend ihrer Anordnung in den Figuren 1 bis 3 auch als unterer Folienkörper 10, mittlerer Folienkörper 11 und oberer Folienkörper 12 bezeichnet. Grundsätzlich können auch mehr als drei Folienkörper 10, 11, 12 vorgesehen sein. Die Folienkörper 10, 11, 12 sind innerhalb des Stapels 9 relativ zueinander in einer Scherrichtung elastisch und/oder beweglich angeordnet. Das bedeutet, dass die einzelnen Folienkörper 10, 11, 12 relativ zueinander in der Scherrichtung Relativbewegungen durchführen können. Die Scherrichtung verläuft dabei parallel zu einer Ebene, zu welcher sich die Trägerfolien 2, 3 und die Folienkörper 10, 11, 12 in einem unbelasteten Ausgangszustand parallel erstrecken. Insbesondere sind die Folienkörper 10, 11, 12 relativ zueinander zumindest in ihrer Längsrichtung beweglich angeordnet.

Bevorzugt ist auch der Folienkörper 10, der an diejenige Trägerfolie 3 angrenzt, an welcher das Betätigungselement 8 befestigt ist, relativ zu dieser oberen Trägerfolie 3 in der Scherrichtung elastisch und/oder beweglich angeordnet.

Die Folienkörper 10, 11, 12 können grundsätzlich aus einem beliebigen weichmagnetischen Material bestehen. Bevorzugt wird hierbei ein ferromagnetisches Material, insbesondere ein ferromagnetisches Metall. Insbesondere können die Folienkörper 10, 11, 12 aus einem Eisenblech gebildet sein. Die Dicke der Folienkörper 10, 11, 12 ist insbesondere kleiner als die Dicke der Trägerfolien 2, 3.

Zweckmäßig sind die einzelnen Folienkörper 10, 11, 12 über eine dauerelastische Klebverbindung 13 aneinander befestigt.

Ferner kann zweckmäßig auch der untere Folienkörper 10 über eine solche dauerelastische Klebverbindung 13 an der oberen Trägerfolie 3 befestigt sein.

Eine derartige Klebverbindung 13 kann beispielsweise mittels eines Acrylat-Klebstoffs realisiert werden. Für eine vereinfachte Montierbarkeit kann dabei vorgesehen sein, die Klebverbindungen 13 mit Hilfe eines beidseitig klebenden Klebebands zu realisieren.

Des Weiteren sind die Klebverbindungen 13 hier streifenförmig ausgestaltet, wobei eine im Querschnitt der Fig. 1 und 2 zu messende Breite der jeweiligen Klebverbindung 13 kleiner ist als die Breite der Folienkörper 10, 11, 12. Die jeweiligen Klebverbindungen 13 erstrecken sich zweckmäßig etwa über die gesamte Länge der Folienkörper 10, 11, 12 oder über einen wesentlichen Teil der Länge der Folienkörper 10, 11, 12.

Alternativ können die einzelnen Folienkörper 10, 11, 12 lose aneinander anliegen bzw. aufeinander liegen. Ebenso kann auch der untere Folienkörper 13 lose an der oberen Trägerfolie 3 anliegen.

Entsprechend der hier gezeigten Ausführungsform sind die einzelnen Folienkörper 10, 11, 12 innerhalb des Stapels 9 relativ zueinander beabstandet angeordnet. Ferner ist hier zweckmäßig auch der untere Folienkörper 10 relativ zur oberen Trägerfolie 3 beabstandet angeordnet. Die Beabstandung der Trägerkörper 10, 11, 12 zueinander sowie gegenüber der Trägerfolie 3 erleichtert die freie Beweglichkeit der Folienkörper 10, 11, 12 relativ zueinander sowie gegenüber der Trägerfolie 3 in der Scherrichtung bzw. in deren Längsrichtung. Die Abstände zwischen den Folienkörper 10, 11, 12 und zwischen den unteren Folienkörper 10 und der oberen Trägerfolie 3 lassen sich zweckmäßig durch die Klebverbindung 13 realisieren, insbesondere dann, wenn zur Herstellung der Klebverbindung 13 ein beidseitig klebendes Klebeband verwendet wird. In den Beispielen ist die Dicke der Klebverbindung 13 übertrieben groß dargestellt, wodurch auch die daraus resultierenden Abstände entsprechend übertrieben groß sind. Bei einer anderen Bauform können diese Abstände etwa gleich groß sein wie oder sogar kleiner sein als die Dicken der einzelnen Folienkörper 10, 11, 12. Alternativ kann die Beabstandung auch mittels hier nicht gezeigter Distanzfolien realisiert werden, die zwischen benachbarten Folienkörpern 10, 11, 12 angeordnet werden können, und zwar lose oder verklebt.

Die unmittelbar lose aufeinander liegenden Folienkörper 10, 11, 12 können einseitig oder beidseitig mit einer reibungsreduzierenden Beschichtung versehen sein, z.B. aus PTFE (Polytetrafluorethylen).

Zweckmäßig sind die Folienkörper 10, 11, 12 relativ zueinander deckungsgleich ausgestaltet. Dementsprechend haben sie entsprechend den Fig. 1 und 2 gleiche Breiten und entsprechen Fig. 3 gleiche Längen. Des Weiteren können die Folienkörper 10, 11, 12 insbesondere auch gleiche Dicken aufweisen.

Bei den Darstellungen der Fig. 1 und 2 ist an der oberen Trägerfolie 3 außerdem ein Rahmenelement 14 angebracht, das den Stapel 9 seitlich einfasst. Das Rahmenelement 14 kann an der oberen Trägerfolie 3 angeschweißt oder angeklebt sein. Die Dimensionierung dieses Rahmenelements 14 und die Dimensionierung der Folienkörper 10, 11, 12 sind so aufeinander abgestimmt, dass die Folienkörper 10, 11, 12 das Rahmenelement 14 nicht berühren. Dementsprechend ist zwischen dem Rahmenelement 14 und den Folienkörpern 10, 11, 12 umfangsmäßig jeweils ein Abstand 15 ausgebildet. Gegenüber der oberen Trägerfolie 3 ist das Rahmenelement 14 mit einem Abdeckelement 16 verschlossen, das hierzu z.B. angeklebt sein kann. Hierdurch kann ein nach außen hermetisch abgedichteter Raum zur Aufnahme des Stapels 9 realisiert werden. Insbesondere besteht das Rahmenelement 14 aus dem gleichen Material wie die Trägerfolien 2, 3 und die Distanzfolie 6. Vorzugsweise handelt es sich hierbei um Kunststoff.

Das Abdeckelement 16 kann entsprechend einer vorteilhaften Ausführungsform als magnetisches Rückflussblech ausgestaltet sein.

Vorzugsweise ist der Sensor 1 als Potentiometer ausgestaltet und kann beispielsweise als Positionssensor verwendet werden. Sofern der Sensorabschnitt 7 als Potentiometer ausgestaltet ist, bilden die Elektroden 4, 5 der einen Trägerfolie 2, 3 beispielsweise eine Widerstandsstrecke sowie eine Kollektorstrecke, während die Elektrode 4, 5 der anderen Trägerfolie 2, 3 dann zumindest einen Konnektor bildet, der im Falle einer Betätigung des Sensors 1 die Widerstandsstrecke an der jeweiligen Kontaktstelle mit der Kollektorstrecke elektrisch leitend verbindet.

Bei den hier gezeigten Ausführungsformen ist außerdem ein biegesteifer Träger 17 vorgesehen, der fest mit der vom Betätigungselement 8 abgewandten Trägerfolie 2, also mit der unteren Trägerfolie 2, verbunden ist. Alternativ ist es grundsätzlich möglich, die untere Trägerfolie 2 aus einem entsprechenden biegesteifen Material herzustellen.

Die Fig. 2 und 3 zeigen eine berührungslose Betätigung des Sensors 1 mittels Magnetkraft. Hierzu wird ein Magnetkrafterzeuger 18, bei dem es sich beispielsweise um einen Dauermagneten oder um einen Elektromagneten handeln kann, gegenüber der unteren Trägerfolie 2, also gegenüber der vom Betätigungselement 8 abgewandten Trägerfolie 2 beabstandet positioniert. Im vorliegenden Fall ist der Magnetkrafterzeuger 18 außerdem beabstandet vom Träger 17 angeordnet. Der Magnetkrafterzeuger 18 erzeugt eine magnetische Anziehungskraft auf das weichmagnetische Material des Betätigungselements 8. Hierdurch werden entsprechende Betätigungskräfte in die einzelnen Folienkörper 10, 11, 12 eingeleitet, wodurch sich die Folienkörper 10, 11, 12 entsprechend Fig. 3 lokal in Richtung zum Magnetkrafterzeuger 18 hin durchbiegen. Dabei wirkt eine entsprechende Gesamt-Betätigungskraft auf die obere Trägerfolie 3, also auf die mit dem Betätigungselement 8 gekoppelte Trägerfolie 3. Somit bewirkt die Durchbiegung des Stapels 9 eine Kontaktierung zwischen den beiden Trägerfolien 2, 3 bzw. deren Elektroden 4, 5.

Durch eine entsprechende Potentiometerschaltung kann beispielsweise die Position des Magnetkrafterzeugers 18 in der Längsrichtung des Sensors 1 ermittelt werden.

Die Fig. 1 bis 3 zeigen einen Linearsensor. Es ist klar, dass der erfindungsgemäße Sensor 1 grundsätzlich auch als Winkelsensor ausgestaltet werden kann. Ebenso kann es sich auch um einen einfachen Schalter handeln.

## Patentansprüche

1. Sensor, insbesondere Positionssensor,
- mit zwei zueinander beabstandeten Trägerfolien (2, 3), die jeweils zumindest eine Elektrode (4, 5) aufweisen,
- mit einem weichmagnetischen Betätigungselement (8), das sich entlang einer der Trägerfolien (2, 3) erstreckt und an dieser angeordnet ist,
**dadurch gekennzeichnet,**
**dass** das Betätigungselement (8) aus einem Stapel (9) von mindestens zwei weichmagnetischen Folienkörpern (10, 11, 12) besteht, die relativ zueinander in Scherrichtung elastisch und/oder beweglich angeordnet sind.

2. Sensor nach Anspruch 1,
**dadurch gekennzeichnet,**
**dass** der Folienkörper (10), der an die Trägerfolie (3) angrenzt, an welcher das Betätigungselement (8) befestigt ist, relativ zu dieser Trägerfolie (3) in Scherrichtung elastisch und/oder beweglich angeordnet ist.

3. Sensor nach Anspruch 1 oder 2,
**dadurch gekennzeichnet,**
**dass** zumindest einer der weichmagnetischen Folienkörper (10, 11, 12) aus einem ferromagnetischen Material oder aus einem ferromagnetischen Metall oder aus Eisenblech besteht.

4. Sensor nach einem der Ansprüche 1 bis 3,
**dadurch gekennzeichnet,**
**dass** die einzelnen weichmagnetischen Folienkörper (10, 11, 12) über eine dauerelastische Klebverbindung (13) aneinander befestigt sind.

5. Sensor nach einem der Ansprüche 1 bis 3,
**dadurch gekennzeichnet,**
**dass** die einzelnen weichmagnetischen Folienkörper (10, 11, 12) lose aufeinander liegen.

6. Sensor nach einem der Ansprüche 1 bis 5,
**dadurch gekennzeichnet,**
**dass** der Folienkörper (10), der an die Trägerfolie (3) angrenzt, an welcher das Betätigungselement (8) befestigt ist, an dieser Trägerfolie (3) über eine dauerelastische Klebverbindung (13) befestigt ist.

7. Sensor nach einem der Ansprüche 1 bis 5,
**dadurch gekennzeichnet,**
**dass** der Folienkörper (10), der an die Trägerfolie (3) angrenzt, an welcher das Betätigungselement (8) befestigt ist, an dieser Trägerfolie (3) lose anliegt.

8. Sensor nach Anspruch 4 oder 6,
**dadurch gekennzeichnet,**
**dass** die jeweilige Klebverbindung (13) als Streifen ausgestaltet ist, dessen Breite kleiner als die Breite der Folienkörper (10, 11, 12) ist.

9. Sensor nach einem der Ansprüche 1 bis 4 und 6 bis 8,
**dadurch gekennzeichnet,**
**dass** die einzelnen weichmagnetischen Folienkörper (10, 11, 12) im Stapel (9) zueinander beabstandet angeordnet sind.

10. Sensor nach einem der Ansprüche 1 bis 6 sowie 8 und 9,
**dadurch gekennzeichnet,**
**dass** der Folienkörper (10), der an die Trägerfolie (3) angrenzt, an welcher das Betätigungselement (8) befestigt ist, zu dieser Trägerfolie (3) beabstandet angeordnet ist.

11. Sensor nach einem der Ansprüche 1 bis 10,
**dadurch gekennzeichnet,**
**dass** die weichmagnetischen Folienkörper (10, 11, 12) deckungsgleich ausgestaltet sind und/oder gleiche Dicken aufweisen.

12. Sensor nach einem der Ansprüche 1 bis 11,
**dadurch gekennzeichnet,**
**dass** an der Trägerfolie (3), an der das Betätigungselement (8) befestigt ist, ein Rahmenelement (14) befestigt ist, das die weichmagnetischen Folienkörper (10, 11, 12) seitlich mit einem Abstand (15) umschließt und das gegenüber dieser Trägerfolie (3) mit einem Abdeckelement (16) verschlossen ist.

13. Sensor nach Anspruch 12,
**dadurch gekennzeichnet,**
**dass** das Abdeckelement (16) ein magnetisches Rückflussblech ist.

14. Sensor nach einem der Ansprüche 1 bis 13,
**dadurch gekennzeichnet,**
**dass** der Sensor (1) als Potentiometer ausgestaltet ist, wobei die Elektroden (4, 5) der einen Trägerfolie (2, 3) eine Widerstandsstrecke und eine Kollektorstrecke bilden, während die Elektrode (4, 5) der anderen Trägerfolie (2, 3) zumindest einen Konnektor bildet.

15. Sensor nach einem der Ansprüche 1 bis 14,
**dadurch gekennzeichnet,**
**dass** die vom Betätigungselement (8) abgewandte Trägerfolie (2) biegesteif ausgestaltet ist oder fest mit einem biegesteifen Träger (17) verbunden ist.

## Claims

1. A sensor, in particular a position sensor,
- comprising two support films (2, 3), which are arranged at a distance to one another, each of which encompass at least one electrode (4, 5),
- comprising a magnetically soft actuating element (8), which extends along one of the support films (2, 3) and which is arranged thereon,
**characterized in**
**that** the actuating element (8) consists of a stack (9) of at least two magnetically soft film bodies (10, 11, 12), which are arranged relative to one another in shear direction in an elastic and/or movable manner.

2. The sensor according to claim 1,
**characterized in**
**that** the film body (10), which abuts on the support film (3), to which the actuating element (8) is fastened, is arranged relative to this support film (3) in shear direction in an elastic and/or movable manner.

3. The sensor according to claim 1 or 2,
**characterized in**
**that** at least one of the magnetically soft film bodies (10, 11, 12) consists of a ferromagnetic material or of a ferromagnetic metal or of sheet steel.

4. The sensor according to one of claims 1 to 3,
**characterized in**
**that** the individual magnetically soft film bodies (10, 11, 12) are mounted to one another via a permanent adhesive bond (13).

5. The sensor according to one of claims 1 to 3,
**characterized in**
**that** the individual magnetically soft film bodies (10, 11, 12) loosely lie on top of one another.

6. The sensor according to one of claims 1 to 5,
**characterized in**
**that** the film body (10), which abuts on the support film (3), to which the actuating element (8) is mounted, is mounted to this support film (3) via a permanent adhesive bond (13).

7. The sensor according to one of claims 1 to 5,
**characterized in**
**that** the film body (10), which abuts on the support film (3), to which the actuating element (8) is mounted, loosely rests against this support film (3).

8. The sensor according to claim 4 or 6,
**characterized in**
**that** the respective adhesive bond (13) is embodied as a strip, the width of which is smaller than the width of the film bodies (10, 11, 12).

9. The sensor according to one of claims 1 to 4 and 6 to 8,
**characterized in**
**that** the individual magnetically soft film bodies (10, 11, 12) in the stack (9) are arranged at a distance to one another.

10. The sensor according to one of claims 1 to 6, as well as 8 and 9,
**characterized in**
**that** the film body (10), which abuts on the support film (3), to which the actuating element (8) is mounted, is arranged at a distance to this support film (3).

11. The sensor according to one of claims 1 to 10,
**characterized in**
**that** the magnetically soft film bodies (10, 11, 12) are embodied so as to be congruent and/or so as to encompass the same thicknesses.

12. The sensor according to one of claims 1 to 11,
**characterized in**
**that** a frame element (14) is mounted to the support film (3), to which the actuating element (8) is mounted, said frame element (14) laterally enclosing the magnetically soft film bodies (10, 11, 12) at a distance (15) and being closed by means of a covering element (16) relative to this support film (3).

13. The sensor according to claim 12,
**characterized in**
**that** the covering element (16) is a magnetic backflow plate.

14. The sensor according to one of claims 1 to 13,
**characterized in**
**that** the sensor (1) is embodied as a potentiometer, wherein the electrodes (4, 5) of the one support film (2, 3) form a resistance section and a collector section, while the electrode (4, 5) of the other support film (2, 3) forms at least one connector.

15. The sensor according to one of claims 1 to 14,
**characterized in**
**that** the support film (2) facing away from the actuating element (8) is embodied so as to be bending resistant or so as to be fixedly connected to a bending resistant support (17).

## Revendications

1. Capteur, notamment capteur de position,
- comportant deux feuilles de support (2,3) espacées l'une de l'autre, qui présentent respectivement au moins une électrode (4,5),
- comportant un élément d'actionnement (8) magnétique doux, qui s'étend le long d'une des feuilles de support (2,3) et est disposé sur celle-ci,
**caractérisé en ce que**
l'élément d'actionnement (8) est constitué d'une pile (9) d'au moins deux corps de feuilles (10,11,12) magnétiques doux, qui sont disposés de manière mobile et/ou élastique l'un par rapport à l'autre dans la direction de cisaillement.

2. Capteur selon la revendication 1,
**caractérisé en ce que**
le corps de feuille (10), qui est attenant à la feuille de support (3), sur laquelle l'élément d'actionnement (8) est fixé, est disposé de manière mobile et/ou élastique dans la direction de cisaillement par rapport à cette feuille de support (3).

3. Capteur selon la revendication 1 ou 2,
**caractérisé en ce que**
au moins un des corps de feuilles (10,11,12) magnétiques doux est constitué d'un matériau ferromagnétique ou d'un métal ferromagnétique ou de tôle de fer.

4. Capteur selon une des revendications 1 à 3,
**caractérisé en ce que**
les corps de feuilles (10,11,12) magnétiques doux individuels sont fixés l'un sur l'autre par l'intermédiaire d'une liaison par collage (13) durablement élastique.

5. Capteur selon une des revendications 1 à 3,
**caractérisé en ce que**
les corps de feuilles (10,11,12) magnétiques doux individuels reposent les uns sur les autres en vrac.

6. Capteur selon une des revendications 1 à 5,
**caractérisé en ce que**
le corps de feuille (10), qui est attenant à la feuille de support (3), sur laquelle l'élément d'actionnement (8) est fixé, est fixé à cette feuille de support (3) par l'intermédiaire d'une liaison par collage (13) durablement élastique.

7. Capteur selon une des revendications 1 à 5,
**caractérisé en ce que**
le corps de feuille (10), qui est attenant à la feuille de support (3), sur laquelle l'élément d'actionnement (8) est fixé, repose en vrac sur cette feuille de support (3).

8. Capteur selon la revendication 4 ou 6,
**caractérisé en ce que**
la liaison par collage (13) respective est configurée comme des bandes, dont la largeur est plus petite que la largeur des corps de feuilles (10,11,12).

9. Capteur selon une des revendications 1 à 4 et 6 à 8,
**caractérisé en ce que**
les corps de feuilles (10,11,12) magnétiques doux individuels sont disposés dans la pile (9) en étant espacés les uns des autres.

10. Capteur selon une des revendications 1 à 6 ainsi que 8 et 9,
**caractérisé en ce que**
le corps de feuille (10), qui est attenant à la feuille de support (3), sur laquelle l'élément d'actionnement (8) est fixé, est disposé en étant espacé par rapport à cette feuille de support.

11. Capteur selon une des revendications 1 à 10,
**caractérisé en ce que**
les corps de feuilles (10,11,12) magnétiques doux sont configurés de manière à coïncider et/ou présentent les mêmes épaisseurs.

12. Capteur selon une des revendications 1 à 11,
**caractérisé en ce que**
sur la feuille de support (3), sur laquelle l'élément d'actionnement (8) est fixé, un élément d'armature (14) est fixé, lequel enveloppe les corps de feuilles (10,11,12) magnétiques doux latéralement avec un espacement (15) et est obturé par rapport à cette feuille de support (3) avec un élément de recouvrement (16).

13. Capteur selon la revendication 12,
**caractérisé en ce que**
l'élément de recouvrement (16) est une tôle de reflux magnétique.

14. Capteur selon une des revendications 1 à 13,
**caractérisé en ce que**
le capteur (1) est configuré comme un potentiomètre, dans lequel les électrodes (4,5) d'une des feuilles de support (2,3) forment une piste de résistance et une piste de collecteur, alors que l'électrode (4,5) de l'autre feuille de support (2,3) forme au moins un connecteur.

15. Capteur selon une des revendications 1 à 14,
**caractérisé en ce que**
la feuille de support (2) qui se détourne de l'élément d'actionnement (8) est configurée de manière rigide en flexion ou est reliée solidement à un support (17) rigide en flexion.
